# EUROPEAN PATENT APPLICATION

(11) **EP 3 570 407 A1**
(43) Date of publication of application: **20.11.2019**
(21) Application number: 19461542.3
(22) Date of filing: 18.05.2019
(51) Int. Cl.: H02J 7/34, H02J 7/35, H02J 7/00

(54) **A METHOD AND ARRANGEMENT FOR CONTROLLING THE CHARGING OF ENERGY STORAGE DEVICES IN METROLOGICAL INSTRUMENTS**

(30) Priority: 18.05.2018 PL 42561318
(71) Applicant: Apator Metrix Spolka Akcyjna, 83-110 Tczew (PL)
(72) Inventor: Nowakowski, Marek, 32-200 Miechów (PL)
(74) Representative: Wroblewski, Marcin Jan

(57) **Abstract**

The invention relates to a method for controlling the charging of energy storages (2) in metrological instruments, in which at least two voltage power sources (B1, B2, ... Bn) are connected to an instrument, and their presence is decoded and their degree of discharge or depletion is verified based on measurements and/or calculations, characterised by selecting at least one energy source, redirecting energy from this at least one selected energy source to a shared energy storage (2), followed by charging the shared energy storage (2).

The invention also comprises an arrangement for charging an energy storage in metrological instruments for the implementation of the method for controlling the charging of energy storages defined according to the invention, which arrangement is provided with at least two voltage power sources characterised by the presence of an adder-power supply system (1) in a line for connecting a power supply from at least two energy sources, its output being connected to the energy storage (2), and the control inputs of the adder-power supply system (1) being connected to the outputs of the control and monitoring circuit (4).

## Description

The invention relates to a method for controlling the charging of energy storages in metrological instruments, in which at least two DC voltage power sources are connected to an instrument and their degree of discharge or depletion is verified based on measurements and calculations. The invention also relates to an arrangement for charging an energy storage in metrological instruments, in which at least two DC voltage power sources are connected to an instrument.

The existing solutions enable the use of certified power sources in arrangements compliant with the European Union directive defining the essential requirements to be fulfilled by each product intended for use in potentially explosive zones - called the ATEX directive (French: *Atmospheres Explosibles*). Such sources have built-in safeguards protecting them against a state of short circuit or overload. Their lifespan also depends on the magnitude of load currents, drawn by impulses and continuously. This is why energy from such sources is stored in electronic systems using energy storages recreating the low impedance of a power source, e.g. supercapacitors. It is only the energy from such energy storages, delivering stable power supply voltages using consecutive safeguards, that is used to power function modules of electronic systems, such as systems for monitoring, control, imaging, radio or others, whose specifics of operation considering their construction involve high variability of loads.

Depending on the complexity of such instruments and the imposed functionality, there can be several power sources, in which each one is connected by means of protective circuits to a separate energy storage. It is only by each energy storage that each of the function modules of an instrument is powered using safeguards with topology adjusted to the needs. Considering the lifespan of an instrument and prioritised execution of its fundamental functions which involve the execution of measurements of values depleted by a consumer: water, energy, gas, heat or others - the supply of power to each of the functional blocks is attributed priorities relevant to requirements, which are taken into account in construction and in the operating principle.

From international patent application WO13156945 A1 there is a known arrangement of a static gas meter comprising: a measurement circuit for detecting the flow of gas delivered to a user, a wireless transmission system for sending measurements performed by the measurement circuit, a control unit adjusted to receiving measurements from the measurement circuit and to monitoring the wireless transmission system in order to transmit the measurements, a battery adjusted to generate a power supply voltage to power the control unit, the measurement circuit and the wireless transmission system. The arrangement according to this solution is characterised by being provided with a charging package for storing energy in order to power the wireless transmission system, if necessary, and an operating voltage adjustment system incorporated between the accumulator and the energy storage package. In this solution, a measurement circuit and a control unit are functionally connected to an accumulator, and the control unit is adjusted to controlling a voltage adjustment system so as to adjust the charging of a storing package, usually to a higher voltage than the battery voltage.

The purpose of the solution being the object of the invention involved the development of a method for controlling the charging of energy storages in metrological instruments and the development of an arrangement for the implementation of this method, which would ensure reducing the size of the instrument and its costs, and simultaneously fulfil the clients' expectations with respect to the operating time on the given set of batteries, and would increase the reliability of instruments.

The object of the invention is a method for controlling the charging of energy storages in metrological instruments, in which at least two voltage power sources are connected to an instrument, and their presence is decoded and their degree of discharge or depletion is verified based on measurements and/or calculations characterised by selecting at least one energy source, redirecting energy from this at least one selected energy source to a shared energy storage, followed by charging the shared energy storage.

Preferably, in the method for controlling the charging of energy storages in metrological instruments according to the invention, the selection of at least one energy source is made dependent on the implemented function of a metrological instrument, including in particular at least one of the following functions: metrological, transmitting measurement data or controlling a valve.

Equally preferably, in the method for controlling the charging of energy storages in metrological instruments according to the invention, in the case of detecting a malfunction or discharge of the selected energy source, another energy source is selected or the shared energy storage is charged from several sources simultaneously.

The essence of the invention is also an arrangement for charging an energy storage in metrological instruments for the implementation of the method for controlling the charging of energy storages, which arrangement is provided with at least two voltage power sources characterised by the presence of an adder-power supply system in a line for connecting a power supply from at least two energy sources, its output being connected to the energy storage, and the control inputs of the adder-power supply system being connected to the outputs of the control and monitoring circuit.

Preferably, in the arrangement according to the invention, each energy source is connected to an adder-power supply system via a current limiter.

The solution according to the invention is advantageous in that due to the connection of at least two power sources to one energy storage using an energy adder-splitter system, a possibility is provided to reduce the dimensions of the instrument and the costs of its production, since room is saved for the second one of the storages, and possibility is also provided to implement each of the functions of the instrument even with premature depletion of one of the power sources, which extends its operating time on a given set of batteries and increases the reliability of its operation.

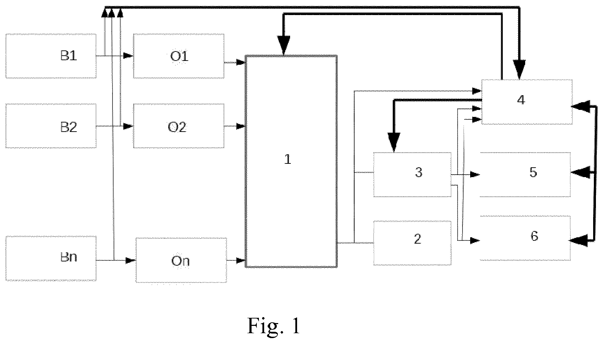

The object of the invention is presented in embodiments not limiting its scope, and in the drawing, in which fig. 1 presents the schematic construction of an arrangement for controlling the charging of energy storages in metrological instruments according to the invention.

The invention will be explained in more detail in an example describing the operation of an instrument powered by "n" power sources (B1, B2, ... Bₙ) using "n" current limiters (O1, O2, ... Oₙ) connected to "n" inputs of an adder-power supply system (1) and "n" signal inputs of a control and monitoring circuit (4). The output of the adder-power supply system (1) is connected to an energy storage (2), the input of a power supply switchboard (3) and the power supply-decoder input of the control and monitoring circuit (4). The outputs of the switchboard (3) are connected to an input powering the valve control circuit (5) and a signal input of the control and monitoring circuit (4), an input powering the radio circuit (6) and another signal input of the control and monitoring circuit (4). The outputs of the control and monitoring circuit (4) controlling the power supply switching method are connected to the control inputs of the power supply switchboard (3). The outputs of the control and monitoring circuit (4) controlling the method for switching the power supply from the sources are connected to the control inputs of the adder-power supply system (1). The control and monitoring circuit (4), the valve control circuit (5), the radio circuit (6) are connected via a control-communication bus.

At a time when no energy source (B1, B2, ... Bₙ) has ever been connected before, the energy storage (2) is discharged, and the device is not operating, since the control and monitoring circuit (4) is not powered.

Usually, already during production, after connecting any of the sources (B1, B2, ... Bₙ), charging of the energy storage (2) is initiated by the respective current limiters (O1, O2, ... Oₙ) and the adder-power supply system (1). Upon charging the energy storage (2) to a threshold voltage lower than the voltage of the connected source (B1, B2, ... Bₙ), there is a reset of the control and monitoring circuit system (4), which begins its operation and checks which one of the power sources (B1, B2, ... Bₙ) is connected, using for this purpose the signal inputs connected to the outputs of power sources (B1, B2, ... Bₙ). Upon decoding the number of the connected power source, the control and monitoring circuit (4) controls the inputs of the adder-power supply system (1), causing the activation of keys redirecting energy from only one connected power source (B1, B2, ... Bₙ) to the energy storage (2) which, after a certain time has passed, is charged to the full power source voltage. Regardless of the executed measurement functions, the control and monitoring circuit (4) executes functions verifying the presence of connected power sources. Connecting a second power source of the still disconnected ones (B1, B2, ... Bₙ) enables the control and monitoring circuit (4) to select at least one of the connected sources (B1, B2, ... Bₙ) for charging the energy storage (2). In this manner, the execution of metrological functions and/or control of the operation of the valve (5) may proceed for example at the expense of energy, for instance originating from source (B1), and powering of the radio (6) - at the expense of energy originating for instance from source (B2). In a case when measurements and/or calculations, while working at the client's place, indicate that all connected sources are depleted, or their capacity is insufficient for executing the required function, charging of the energy storage (2) may proceed simultaneously from all connected sources (B1, B2, ... Bₙ). This enables the endurance and operation of the device in extremely unfavourable situations. In such situations, when charging of the energy storage (2) is implemented from at least two or simultaneously from all connected sources (B1, B2, ... Bₙ), a reduction in the values of load currents of the sources (B1, B2, ... Bₙ) is also provided, which increases their durability.

Disconnection of any one of the connected sources (B1, B2, ... Bₙ) is detected by the control and monitoring circuit (4), which delivers control signals to the inputs of the adder-power supply system (1), forcing this input to be cut off from the energy storage (2) - if it was connected to it earlier. Erroneous connection of any of the sources (B1, B2, ... Bₙ) in reverse polarisation to the respective inputs of the current limiter (O1, O2, ... Oₙ), will be detected and the control and monitoring circuit (4) will prevent the connection of a wrongly polarised source to the energy storage (2), protecting the energy accumulated therein and preventing its discharge.

In the embodiment, a battery was used as the energy source (B1, B2, ... Bₙ), although for a person skilled in the art it is obvious that a different DC voltage source, e.g. a photovoltaic cell, can be the energy source.

## Claims

1. A method for controlling the charging of energy storages in metrological instruments, in which at least two voltage power sources are connected to an instrument, and their presence is decoded and their degree of discharge or depletion is verified based on measurements and/or calculations, **characterised in that** at least one energy source is selected, energy is redirected from this at least one selected energy source to a shared energy storage (2), followed by charging the shared energy storage (2).

2. The control method according to claim 1 **characterised in that** selection of the at least one energy source is made dependent on the executed function of the metrological instrument, including in particular at least one of the following functions: metrological, transmitting measurement data or controlling a valve.

3. The control method according to claim 1 or 2 **characterised in that** in the case of detecting a malfunction or discharge of the selected energy source, another energy source is selected or a shared energy storage (2) is charged from several energy sources simultaneously.

4. An arrangement for charging an energy storage in metrological instruments for implementing the method for controlling the charging of energy storages, which arrangement is provided with at least two voltage power sources, **characterised in that** in a line for connecting a power supply from at least two energy sources there is an adder-power supply system (1), whose output is connected to the energy storage (2), and the control inputs of the adder-power supply system (1) are connected to the outputs of the control and monitoring circuit (4).

5. The arrangement according to claim 4 **characterised in that** each energy source is connected to the adder-power supply system (1) via a current limiter.
